(19) Europäisches Patentamt
European Patent Office
Office européen des brevets

(11) **EP 3 045 257 B1**

(12) **EUROPEAN PATENT SPECIFICATION**

(45) Date of publication and mention
of the grant of the patent:
**16.05.2018 Bulletin 2018/20**

(51) Int Cl.:
***B23K 26/082*** *(2014.01)*    ***B23K 26/0622*** *(2014.01)*
***B23K 26/03*** *(2006.01)*

(21) Application number: **15195007.8**

(22) Date of filing: **17.11.2015**

(54) **METHOD AND APPARATUS FOR LASER PROCESSING**

VERFAHREN UND VORRICHTUNG ZUR LASERVERARBEITUNG

PROCÉDÉ ET APPAREIL DE TRAITEMENT DE LASER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.01.2015 EP 15000055**

(43) Date of publication of application:
**20.07.2016 Bulletin 2016/29**

(73) Proprietors:
• **Berner Fachhochschule Wissens- und Technologietransfer (WTT)**
  **3400 Burgdorf (CH)**
• **Daetwyler Graphics AG**
  **3368 Bleienbach (CH)**

(72) Inventors:
• **Jäggi, Beat**
  **3427 Utzenstorf (CH)**
• **Zimmermann, Markus**
  **3013 Bern (CH)**

(74) Representative: **Keller & Partner Patentanwälte AG**
  **Eigerstrasse 2**
  **Postfach**
  **3000 Bern 14 (CH)**

(56) References cited:
**EP-A1- 2 463 051    WO-A2-2009/039184**
**FR-A5- 2 112 586    US-A1- 2005 205 778**

## Description

### Technical field

The invention is related to methods for adjusting a laser processing apparatus whereby the laser processing apparatus comprises a laser source capable of emitting a beam of laser pulses for processing a target, and a laser scanner which is configured to move the beam of laser pulses over the target to be processed. Additionally, the present invention is concerned with a laser processing apparatus.

### Background art

In a variety of industrial fields, materials are processed or machined with laser systems. Thereby, target materials are cut, drilled, structured or otherwise modified by interaction with photons from the laser source.

One common type of laser systems used for machining and processing comprises a pulsed laser source in combination with a laser scanner. In such systems, a beam of laser pulses emitted from the laser source can be deflected by the laser scanner and moved over the material to be processed or machined. Thus, the laser pulses can be directed to specific positions on the target material. If the system is properly configured, it is for example possible to generate single dots on the target material with dimensions similar to the spot size of the laser pulses. Moreover, by moving the laser beam with the laser scanner, predefined patterns consisting of a plurality of single dots can be produced.

However, in order to achieve a desired precision, the emission of laser light from the laser source has to be coordinated with the movement of the laser scanner. This is in particular important for surface and 3-dimensional structuring.

In this context the publication "Ultra high precision surface structuring by synchronizing a galvo scanner with an ultra-short pulsed laser system in MOPA arrangement" (In: Proc. SPIE 8243, San Francisco, USA) describes a system for laser processing. The system is based on a master oscillator power amplifier (MOPA) arrangement. The system comprises a passively mode locked seed laser with a constant frequency followed by a pulse picker and a rod or disk amplifier generating the pulsed laser light used for processing. In this system, movements of the laser scanner are synchronized with the laser pulses by means of a phase locked loop (PLL). Specifically, the phase of the scanner control unit is locked to a laser pulse signal obtained from the laser amplifier. Compared to an asynchronous system, this setup allows for improving a relative precision between single dots in a pattern on a surface of a target material.

Another laser processing apparatus is described in DE 11 2009 003 829 T5 (Toshiba). The system comprises a reference oscillator and a laser oscillator emitting a synchronized pulsed laser beam. A laser scanner of the system is synchronized with the laser beam. Thereby, a phase of the starting signal for the laser scanner is adjusted in order to compensate for an acceleration period of the laser scanner. Therefore, this apparatus allows for improving a relative precision between single dots of a surface structure.

WO 2013/118046 A1 (DCG Systems), which belongs to a very distant technical field, namely laser based defect localization analysis of integrated circuits, discloses various aspects of synchronization of laser beams with electrical test signals in testing integrated circuits. However, it does not address problems associated with laser processing or cutting, drilling, structuring or otherwise modifying target materials through interaction with laser light.

US 5,999,302 (Speedring Systems, Inc.) is related to flat field optical scanning systems which can produce scan lines at high speeds, high resolution and on large formats. Typically, these systems are used to illuminate photosensitive materials with specific light. As a light source, continuous wave gas lasers, solid state laser and laser diodes are mentioned. The so produced laser light might be modulated with separate electronic control systems. The scanning system is based on a polygon scanner with a rotating polygon scan optics having a fluid film bearing and means for scan error correction. Specifically, said means for scan error correction comprise a scan correction mechanism to displace a position of the laser source in order to influence an angle of incidence of the laser light with regard to the polygon facets of the scan optics. Actual displacements of the laser diode are controlled by specific error information stored in a memory of the scanning system and synchronized with individual facets of the polygon scanner. In this system a scan position signal is used to synchronize the means for scan error correction. Thus, the system according to US 5,999,302 is intended for continuous wave laser sources, requires relatively complicated means for adjusting the position of the laser source and does not address specific problems associated with laser processing apparatuses based on pulsed laser systems. A method for adjusting a laser processing apparatus according to the preamble of claim 1 is known from EP 2 463 051 A1. Hence, laser processing apparatuses used for structuring so far feature a relative high precision in terms of relative positions between individual dots or structures. However, especially in the field of surface structuring, it is often desired or even essential to additionally achieve high precision with regard to an absolute position of individual dots or structures on a target material.

There is thus still a need for improved methods and apparatuses for laser processing which overcome the aforementioned drawbacks.

**Disclosure of the invention**

Therefore, it is an object of the present invention to provide an improved method or apparatus for laser processing. Especially, the method or apparatus should allow for laser processing of a target material with increased precision, in particular in the field of surface structuring. Preferably, the absolute precision of the positions of individual dots and structures on the target material should be increased. Moreover, the method or apparatus should be as easy to implement as possible.

Surprisingly, it has been found that the above mentioned problems can be solved by the features of the independent claims.

Accordingly, a first aspect of the present invention relates to a method for adjusting a laser processing apparatus, whereby the laser processing apparatus comprises a laser source capable of emitting a beam of laser pulses for processing a target, and a laser scanner which is configured to move the beam of laser pulses over the target to be processed, and whereby a movement of the laser scanner is synchronized with respect to the laser pulses, wherein for synchronisation a phase of a scanner control signal which controls the movement of the laser scanner is locked to the laser pulses or a laser pulse signal, and whereby the phase of the scanner control signal is adjusted such that an emitted laser pulse hits the target to be processed in a desired position. As explained below in more detail, the laser source is in particular based on a master oscillator power amplifier (MOPA) arrangement, especially with a passive mode-locked seed laser.

A "laser source capable of emitting a beam of laser pulses" is in particular meant to be a pulsed laser source and/or a laser source emitting laser light pulses with a given pulse duration at a given repetition rate. Thereby, the optical power appears in pulses of predefined duration and at a given repetition rate. Especially, the laser source is not a continuous wave laser source.

In the present context, a "laser scanner" is a device for controllably deflecting a laser beam in at least one dimension, especially in at least two dimensions. In particular, the laser scanner comprises at least one moveable, preferably rotatable, mirror which is suitable for reflecting the beam of laser pulses. Especially, the laser scanner comprises at least two moveable mirrors, in particular the at least two mirrors are mounted on orthogonal axes. However, the at least two mirrors can as well be mounted on non-orthogonal axes. Especially, the laser scanner comprises a mirror polygon with at least 3, especially 4, in particular 5 or 6 facets. In particular, the laser scanner comprises a mirror polygon with at least 8, 12 or 25 facets. Especially, the laser scanner comprises a mirror polygon with exactly 8, 12 or 25 facets.

For moving or rotating the at least one mirror, the laser scanner further comprises a drive unit, e.g. a galvanometer and/or an electrical motor, as well as a scanner control unit which is configured to control the movement of the at least one mirror. For example, the scanner control unit comprises a rotary encoder and control electronics. Preferably, the laser scanner comprises a clocked scanner control unit. In particular, execution of commands in the scanner control unit and/or movements of the laser scanner are synchronized with a controller clock of the scanner control unit. This allows for a time-controlled deflection of the laser beam or movement of the at least one mirror.

Preferably, the laser scanner comprises a galvanometer driven pivotable mirror. Also suitable is a laser scanner which comprises a rotating mirror, especially a rotating mirror polygon. According to a further preferred embodiment, the laser scanner comprises a galvanometer driven pivotable mirror as well as a rotating mirror, especially a rotating mirror polygon. Such scanners are commercially available and feature a high precision. However, other types of laser scanners might be used too.

The laser scanner can be used in static mode and/or dynamic mode. In static mode, the laser scanner is moved into a defined position and then stopped and held in this defined position. Thus, after reaching the defined position, the laser scanner does not move anymore. In this mode, a beam of laser pulses is deflected to one specific position on the target to be processed.

In dynamic mode, the laser scanner or the beam of laser pulses is moved between a start position and an end position. In particular, the movement is a continuous movement. Especially, between an acceleration period (after start position) and before a deceleration period (before end position), the movement is performed with constant speed. The movement can be reversed and/or repeated periodically. In this mode, the beam of laser pulses is deflected along a line, e.g. a straight line, on the target to be processed.

The term "desired position" stands for a predetermined position on the target to be processed. This can e.g. be a visible mark, an indentation, a protrusion and/or a special point on the target.

It has been found that by adjusting the phase of the scanner control signal such that an emitted laser pulse hits the target to be processed in a desired position, the precision of a laser processing apparatus can greatly be enhanced. In particular, it is possible to direct individual laser pulses to predefined absolute positions on a target with high accuracy. This has been proven especially advantageous for surface structuring applications, such as for preparing gravure forms, e.g. gravure cylinders, used in gravure printing. Thereby, complex surface structures consisting of many individual dots can be precisely generated even on targets with large surfaces.

Moreover, in order to address a working area which exceeds the range of the laser scanner, it is preferable to combine the laser scanner and/or the target with at least one additional mechanical axis, e.g. in the form of a moveable stage. A mechanical axis is to be understood as a device which can translate the laser scanner and/or the target in at least one direction, especially in at least two distinct directions. With such arrangements, the laser scanner and/or the target can be placed on the moveable stage in order to extend the working area. However, proper alignment of mechanical axes and the laser scanner is difficult to achieve. In this case, misalignments can effectively be compensated by a proper adjustment of the phase of the scanner control signal. Thus, it becomes possible to arrange multiple scan areas side by side in order to produce large structures with a size exceeding the range of the laser scanner as such.

Moreover, the inventive solution allows for improving the precision of a laser processing apparatus without a need of controlling the phase of the laser pulse train. Controlling the phase of the laser pulse train is usually difficult to achieve with ultra-short pulsed laser systems that are typically used in laser processing. In particular, in order to adjust the phase of the laser pulse train with respect to a reference signal, adjustment of the clock frequency of the pulse train generating laser would be required. However, in particular if the laser source is based on a master oscillator power amplifier (MOPA) arrangement with a passively mode-locked seed laser, this approach it is not feasible in practice. Thus, as shown in the present invention, controlling the phase of the laser scanner or the scanner control signal, respectively, provides for an advantageous solution of this demanding problem which can be implemented in a reliable and much easy manner.

In particular, for adjusting the phase of the scanner control signal, a deviation between the desired position and an effective position of the emitted laser pulse on the target to be processed is identified. Especially, the deviation stands for a distance between the desired position and the effective position. Thereby, the deviation or distance is measured with respect to the center of the laser spot and the center of the desired position.

A determination of the deviation can for example be done manually, in particular with a microscope. However, it is also possible to use automatic systems as explained below.

Preferably, the phase of the scanner control signal is adjusted in an iterative process until the deviation between the desired position and the effective position falls below a predetermined threshold. This approach allows for an efficient and straightforward adjustment of the phase of the scanner control signal and ensures a desired absolute precision of the laser processing apparatus.

The threshold will depend on the desired precision of the laser processing apparatus. According to a preferred embodiment, the threshold is equal to 1 times, especially 0.5 times, preferably 0.1 times, especially preferred 0.01 times, an average diameter of the laser spot size on the target.

According to an advantageous embodiment, adjusting the phase comprises the following steps:

a. Defining the desired position on the target to be processed;

b. Emitting a laser pulse, especially with the laser scanner in the dynamic mode;

c. Identification of a deviation between the desired position and an effective position of the emitted laser pulse;

d. Checking if the deviation falls below a predetermined threshold;

e. If required, adjusting the phase of the scanner control signal and repeating steps b. - e. until the deviation between the desired position and the effective position falls below the predetermined threshold.

A further aspect of the present invention is concerned with a method for defining a desired position in a working area of a laser processing apparatus, in particular in a method as described above, whereby the laser processing apparatus comprises a laser source capable of emitting a beam of laser pulses for processing a target in a working area, and a laser scanner which is configured to move the beam of laser pulses over the target to be processed, characterized in that an optical sensor covered with a pinhole is placed at the desired position in the working area, the beam of laser pulses is directed to the pinhole and subsequently a pulse form of a laser pulse going through the pinhole is recorded with the optical sensor in order to record a reference pulse.

This method for defining of a desired position in a working area of a laser processing apparatus is in particular used in the above mentioned method for adjusting a laser processing apparatus. However, it is also possible to use it independently in a different method.

An "optical sensor" is a device which is capable of converting light of the beam of laser pulses into an electrical signal, in particular based on the photoelectric effect. The optical sensor can e.g. be a photodiode, a photo resistor or a charge coupled device (CCD).

In particular, when the beam of laser pulses is directed to the pinhole and subsequently the pulse form of the laser pulse going through the pinhole is recorded with the optical sensor in order to record a reference pulse, the laser scanner is operated in static mode.

With this method, it is possible to define a desired position in a working area of a laser processing apparatus with high accuracy. By using a pinhole, spatial precision is greatly enhanced. Thereby, the desired position is not only characterized by the spatial position as such but also by the pulse form at this position. Thus, the desired position is additionally characterized by a fingerprint of the laser pulse or the recorded reference pulse. Especially, defining a desired position in such a manner allows for adjusting a laser processing apparatus in an automatic process. This is explained in more detail below.

Moreover, if the laser scanner is combined with an additional mechanical axis, e.g. in the form of a moveable stage, well defined desired positions allow for a very precise tuning between the laser scanner and the mechanical axis. Particularly, angular misalignment and/or unequal scaling between the laser scanner and the mechanical axis can be compensated efficiently. Also, multiple scan areas can be arranged side by side in order to produce large structures with a size exceeding the range of the laser scanner as such.

Preferably, the pulse form represents a temporal evolution of the laser pulse intensity. This has been proven to be a significant characteristic of a laser pulse which allows for a meaningful comparison between different pulses.

However, it is in principle possible to represent the pulse form by a different characteristic, for example the spatial distribution of the laser pulse intensity within the pinhole area.

Advantageously, a ratio of a diameter of the pinhole to a diameter of the laser beam is from 0.5 - 3, in particular from 0.7 - 2, especially from 0.8 - 1.5. Thereby, the diameter of the laser beam is measured in a plane of the pinhole. With such ratios, a high spatial resolution and precision is achieved.

Nevertheless, different ratios might be useful for special applications.

Preferably, in order to produce the pinhole, the optical sensor is covered with an opaque material and the beam of laser pulses is directed to the opaque material in order to produce the pinhole in the opaque material, in particular by ablation of the opaque material. An "opaque material" is a material which does essentially not transmit light of the beam of laser pulses used. The pinhole is in particular produced by ablation of the opaque material in the area where the beam of laser pulses impinges on the opaque material. For ablation, the laser pulse intensity or power is adjusted to a suitable value.

Preferably, the beam of laser pulses is directed to the opaque material with the laser scanner in static mode.

With such a method, a pinhole with an opening corresponding to a cross section of the laser beam can be produced very precisely. Overall, this method further improves the accuracy of the desired position.

It is however also possible to produce the pinhole with a different method, e.g. by drilling or stamping. Nevertheless, with such methods a size and shape of the pinhole opening will only approximately correspond to the cross section of the laser beam.

Especially, the opaque material is a sheet of metal, in particular made of steel and/or having a thickness of 1 $\mu$m - 1 mm, preferably 3 $\mu$m - 500 $\mu$m, especially 10 $\mu$m - 100 $\mu$m. Such materials are essentially opaque for the laser light typically used in laser processing. Moreover, laser ablation of these materials works well.

However, other materials, such as e.g. a polymer material or a composite material might be suitable too.

In particular, while producing the pinhole in the opaque material, a beam blocking material is arranged between the optical sensor and the opaque material in order to protect the optical sensor from beam damage. The beam blocking material can for example be an additional sheet of metal, e.g. steel, preferably with a thickness that is larger than the thickness of the opaque material used to produce the pinhole.

Alternatively, the optical sensor can be removed temporally.

Another aspect of the present invention deals with a method for testifying an alignment of a laser processing apparatus comprising the steps of:

   a. Defining a desired position in a working area of a laser processing apparatus with a method as described above;

   b. Emitting a test laser pulse and recording a pulse form of the test laser pulse with the optical sensor in order to obtain a test signal;

   c. Determining a difference signal between the reference signal and the test signal.

In particular, step a. is performed with the laser scanner in static mode and/or step b. is performed with the laser scanner in dynamic mode.

Furthermore, the present invention is concerned with a method for adjusting a laser processing apparatus comprising the steps of:

   a. Defining a desired position in a working area of a laser processing apparatus with a method as described above;

   b. Emitting a test laser pulse and recording a pulse form of the test laser pulse with the optical sensor in order to obtain a test signal;

c. Determining a difference signal between the reference signal and the test signal;

d. Checking if the difference signal falls below a predetermined threshold;

e. If required, adjusting at least one parameter for calibrating the laser scanner and/or a position of the target to be processed in the working area and repeating steps b. - e. until the difference signal falls below the predetermined threshold. If yes, adjustment is complete.

Especially, the calibration parameter for adjusting the laser scanner is the phase of a control signal of the laser scanner.

In particular, step a. is performed with the laser scanner in static mode and/or step b. is performed with the laser scanner in dynamic mode.

In order to compare the difference signal with the threshold, an integral, convolution or cross-correlation of the difference signal can be compared with a corresponding threshold. However, it is also possible to compare e.g. a global maximum of the difference signal with a corresponding threshold.

Preferably, at least steps b. - e. are automatically performed by an appropriately configured control unit. However, if desired, manual control of this method is possible as well.

Overall, the method allows for a very efficient adjustment of a laser processing apparatus. Compared to known methods, the time required for a proper adjustment can be reduced and at the same time absolute precision of the adjustment is increased.

Another aspect of the present invention is a laser processing apparatus, in particular for performing a method as described above. Especially, the laser processing apparatus comprises a laser source capable of emitting a beam of laser pulses for processing a target in a working area, and a laser scanner which is configured to move the beam of laser pulses over the target to be processed.

In particular, the laser processing apparatus further comprises an optical switch arranged past the laser source and which is configured to block or let pass the beam of laser pulses for processing the target and whereby the optical switch is synchronized with respect to the laser pulses or the laser pulse signal. The optical switch can e.g. comprise an acousto-optic modulator (AOM) and/or an electro-optic modulator (EOM). With such a system, the laser pulses can be switched on and off in a controlled manner. In surface structuring, switching on the laser pulses corresponds to a write operation.

Especially, the laser processing apparatus furthermore comprises a control unit, wherein the control unit is configured such that a movement of the laser scanner is synchronized with respect to the laser pulses, wherein for synchronisation a phase of a scanner control signal which controls the movement of the laser scanner is locked to the laser pulses or a laser pulse signal and wherein the control unit is additionally configured so that a phase of the scanner control signal can be adjusted, especially so that an emitted laser pulse hits the target to be processed in a desired position.

In particular, the control unit comprises a phase locked loop (PLL). In particular, the PLL generates a periodic output signal whose phase is related to the phase of a periodic input signal. Usually a PLL comprises a phase detector and a variable frequency oscillator which can generate a periodic oscillator signal. The phase detector compares the phase of the periodic oscillator signal with the phase of the input signal and adjusts the oscillator to keep the two phases in a predefined relationship. The periodic oscillator signal can thus be used as a periodic output signal which has a fixed phase relation to the periodic input signal. Especially, a sampling rate of the phase detector is from 1 - 250 MHz, in particular 40 - 160 MHz.

Consequently, in this case, the frequency of the periodic output signal is equal to the frequency of the periodic input signal. However, a phase of the periodic output signal can be shifted with respect to the periodic input signal by a desired phase angle.

Especially, the laser pulse signal is used as the input signal of the PLL. The laser pulse signal can e.g. be derived directly from the laser source or from a trigger signal of the laser source.

The periodic output signal can be used as the control signal of the laser scanner, for example to control a controller clock of the clocked scanner control unit and/or a start signal for the laser scanner. If motions of the laser scanner are controlled by the clocked scanner control unit and/or the start signal for the laser scanner, deflection of the laser beam or movement of the at least one mirror are synchronized with the laser pulses or the laser pulse signal, respectively.

If present, an optical switch can be synchronized similarly. However, there might be a different phase relation between the phase of the laser pulses or the laser pulse signal and the optical switch.

Particularly, the control unit of the laser processing apparatus comprises a memory for storing a list of instructions. By executing the instructions, movements of the laser scanner, operation of the optical switch and/or motions of a mechanical axis can be controlled.

If the laser processing apparatus is for example used for preparing gravure forms for gravure printing, the list of instructions can e.g. be generated by a software which is capable of converting templates, for example texts or images, into appropriate instructions for the laser scanning apparatus.

According to another preferred embodiment, the laser processing apparatus furthermore comprises an optical sensor covered with a pinhole which is placed at a desired position in the working area.

Independent of the specific laser source configuration and for all of the above mentioned methods and embodiments of the laser processing apparatus, a wavelength of the laser pulses emitted by the laser source is preferably within a range of 100 - 4'000 nm, especially 300 - 1'100 nm. For example the wavelength is 343 nm, 355 nm, 515 nm, 532 nm, 1'030 nm or 1'064 nm. These wave lengths are suitable for laser processing, especially for preparing gravure forms used for gravure printing. Nevertheless, for special applications, other wave lengths might be useful as well.

A spot size (diameter) of the beam of laser pulses in a region of the target to be processed is preferably about 1 - 1'000 $\mu$m, especially 3 - 100 $\mu$m. For example, a spot size at a wave length of 532 nm is 10 $\mu$m.

Especially, a pulse duration of the laser pulses emitted by the laser source is in the range of 1 fs - 900 ps, preferably 100 fs - 100 ps, especially 200 fs - 50 ps.

Advantageously, for all of the above mentioned methods and embodiments of the laser processing apparatus, the laser source comprises a master oscillator. Especially, the laser source comprises a mode locked seed laser, especially a passive mode locked seed laser, followed by an amplifier, whereby the amplifier emits the beam of laser pulses for processing the target. In other words, the laser source is based on a master oscillator power amplifier (MOPA) arrangement in this case. Such laser systems have been proven to be especially useful in laser processing.

Preferably, a frequency of the master oscillator represents an integral factor of the frequency of the laser pulses emitted by the amplifier. In particular, a frequency of the laser pulses is within a range of 1 Hz - 1'000 MHz, especially, 50 Hz - 100 MHz, preferably 50 kHz - 20 MHz.

A frequency of the master oscillator (seed laser) is preferably within a range of 10 - 1'000 MHz, especially 25 - 160 MHz. As an example, the frequency of the master oscillator is 82 MHz.

Such frequencies turned out to be advantageous in laser processing apparatuses used in the present invention. However, other different frequencies might be suitable for other systems and applications.

According to a further preferred embodiment, the laser scanner and/or the target to be processed is mounted on a mechanical axis, e.g. on a moveable stage. With such a setup, the range of the laser scanner can be extended and it is possible to process larger targets. Due to the inventive solutions, high precision can be maintained even when using a mechanical axis.

A further aspect of the present invention deals with an optical sensor unit which is obtainable by a process comprising the steps of covering an optical sensor with an opaque material, directing a beam of laser pulses to the opaque material in order to produce a pinhole in the opaque material. Thereby, the optical sensor, the opaque material and the process parameters are defined as described above.

Further advantageous configurations of the invention are evident from the exemplary embodiments.

**Short description of the figures**

The figures used to illustrate the exemplary embodiments show:

Fig. 1    A first laser processing apparatus according to the present invention with a control unit which is configured so that a phase relation between the laser pulse signal and the laser scanner control signal can be adjusted;

Fig. 2    A second laser processing apparatus according to the present invention whereby the target to be processed is mounted on a moveable stage;

Fig. 3    An optical sensor unit during production process;

Fig. 4    The optical sensor unit of Fig. 3 after finishing the production process;

Fig. 5    A top view of the optical sensor unit of Fig. 4;

Fig. 6    A schematically representation of a process for adjusting the first laser processing apparatus of Fig. 1;

Fig. 6a    A detailed view of the desired position on the target after the first step of the process shown in Fig. 6;

Fig. 6b    A detailed view of the desired position and the first effective position of the laser pulse on the target after the second step of the process shown in Fig. 6;

Fig. 6c    A detailed view of the target after completion of the adjustment;

Fig. 7    A schematically representation of a process for adjusting the second laser processing apparatus of Fig. 2;

Fig. 8    The temporal evolution of the laser pulse intensities of some test and reference signals;

Fig. 9    Difference signals obtained in the third step of the process shown in Fig. 7;

Fig. 10    The temporal evolution of some selected signals of the laser processing apparatuses shown in Fig. 1 and 2;

Fig. 11a, b    Subsequent processing of a two adjacent working fields of a target with the laser processing apparatus of Fig. 2;

Fig. 12a, b    A method for measuring an angle $\alpha$ between the moveable linear stage axis and the coordinate system of the laser scanner of Fig. 2.

In the figures, identical parts are designated with the same reference numerals.

**Ways of carrying out the invention**

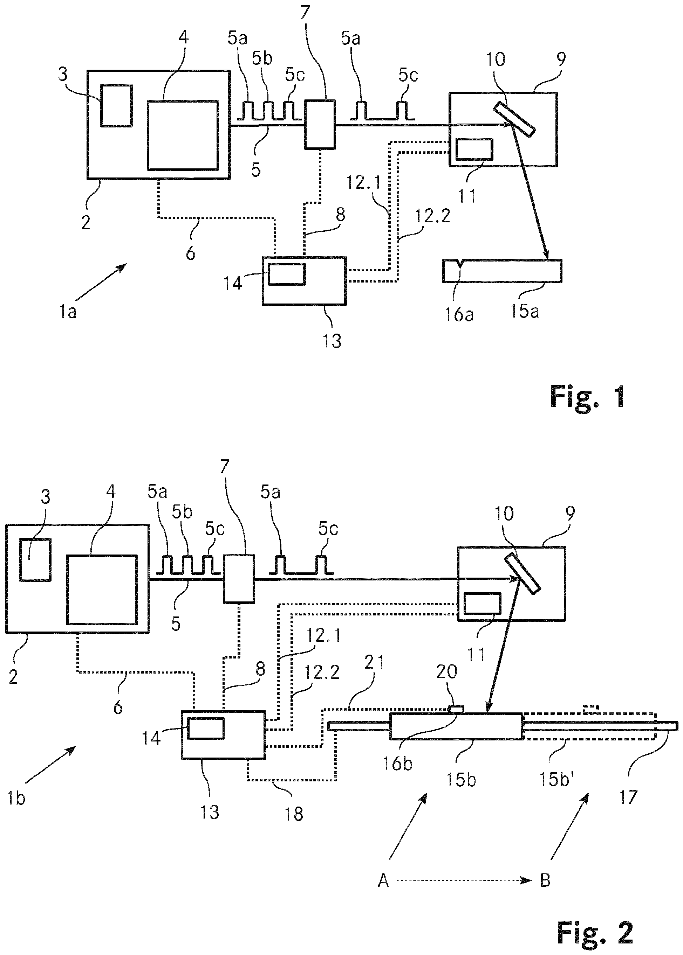

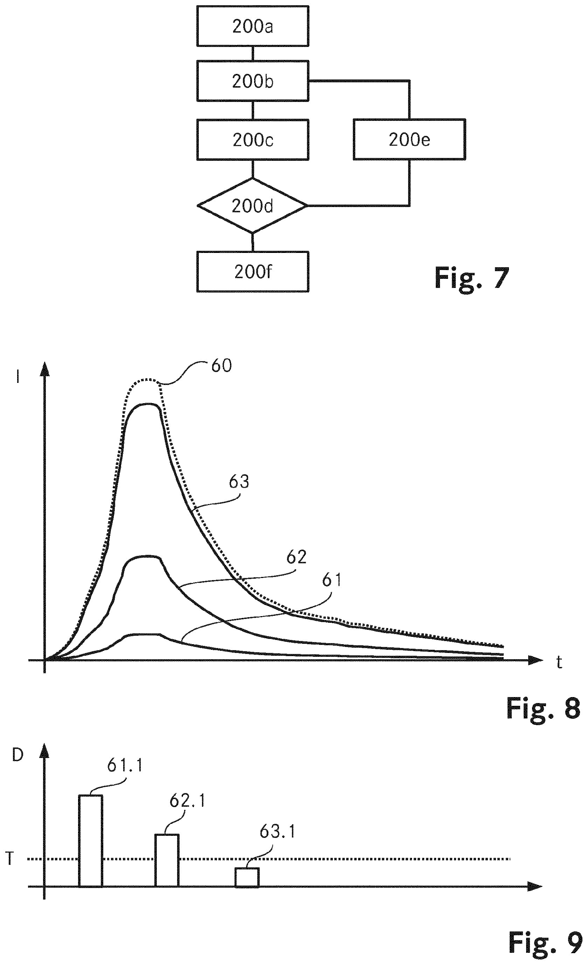

Fig. 1 shows a first laser processing apparatus 1a. The apparatus is based on a master oscillator power amplifier (MOPA) arrangement and comprises a laser source 2, consisting of a mode locked seed laser 3 operated at a frequency of 82 MHz and a master oscillator 4 operated at a frequency of 100 kHz. The laser source 2 emits a beam of laser pulses 5 with a wavelength of 532 nm and pulse duration of about 10 ps. An energy per pulse is up to 200 $\mu$J. In Fig. 1, three consecutive laser pulses 5a, 5b, 5c are shown as an example. The laser source 2 provides an electronic laser pulse signal 6. Thereby, each laser pulse 5a, 5b, 5c generates a corresponding electronic pulse 6a, 6b, 6c (see Fig. 7).

The beam of laser pulses 5 passes an optical switch 7 in the form of an acousto-optic modulator (AOM; also called a Bragg cell), which, based on an electronic switching signal 8, is capable of blocking or letting pass the beam of laser pulses. Thus, with the optical switch 7, individual pulses 5a, 5c from the beam of laser pulses 5 generated by the laser source 2 can be selected.

After passing the optical switch 7, the beam of laser pulses 5 or the selected pulses 5a, 5c, respectively, are deflected by a laser scanner 9. The laser scanner 9 is a galvanometer based scanner of type "IntelliSCANde 14" (available with Scanlab AG, Germany) with a rotatable mirror 10 and a drive unit (not shown in Fig. 1). The clocked scanner control unit 11 comprises a rotary encoder and suitable control electronics.

The beam of laser pulses 5 then passes a 100 mm telecentric f-theta objective (not shown in Fig. 1) and impinges on a copper target 15a (Cu-DHP; commercially available from various suppliers). A spot radius ($w_0$) of the beam of laser pulses 5 on the target 15a is about 5.7 $\mu$m. Thus, a spot diameter of the beam of laser pulses 5 on the target is about 11.4 $\mu$m.

On the copper target 15a, a first desired position 16a is marked in the form of an indentation.

The components of the laser processing apparatus are controlled and synchronized with a main control unit 13. The main control unit 13 comprises a phase locked loop (PLL) 14. Specifically, the laser pulse signal 6 is used as the input signal of the PLL 14. The electronic switching signal 8 for controlling the optical switch is then synchronized or phase locked with the laser pulse signal 6. The PLL 14 also generates an output signal 12.1 which is used to control the controller clock of the clocked scanner control unit 11. The output signal 12.1 is synchronized with the laser pulse signal 6. Thus, the output signal 12.1 has a fixed phase relation to laser pulse signal 6. However, the main control unit 13 is configured so that a phase shift of the output signal 12.1 with respect to the laser pulse signal 6 can be adjusted. Additionally, the main control unit 13 provides a start signal 12.2 for the laser scanner 9. The start signal 12.2 is synchronized with the output signal 12.1 or the laser pulse signal 6, respectively.

Additionally, the main control unit 13 comprises a memory for storing a list of instructions (not shown in Fig. 1). In operation of the laser processing apparatus, individual instructions in the memory are executed subsequently. Thereby, the target 15a is processed with the beam of laser pulses 5, e.g. by ablation. With this method it is possible to generate complex surface structures on the target consisting of many individual dots.

Fig. 2 shows a second laser scanning apparatus 1b. The second laser scanning apparatus 1b is similar to the first laser scanning apparatus 1a. However, the second laser scanning apparatus 1b comprises a second target 15b which is larger than the first target 15a. The second target 15b is mounted on a moveable linear stage axis 17 and can be moved in one direction between a first position A and a second position B (in this position the second target is referred to as 15b'). With such a setup, the range of the laser scanner 9 can be extended in order to process larger targets. The moveable stage 17 is controlled by a stage control signal 18 generated in the main control unit 13.

Moreover, at a desired position 16b of the second target 15b, an optical sensor unit 20 is placed. If the beam of laser pulses 5 is directed to the optical sensor unit 20, a pulse form of individual pulses 5a, 5c can be recorded and transmitted over an electrical signal line 21 to the main control unit 13 for further processing.

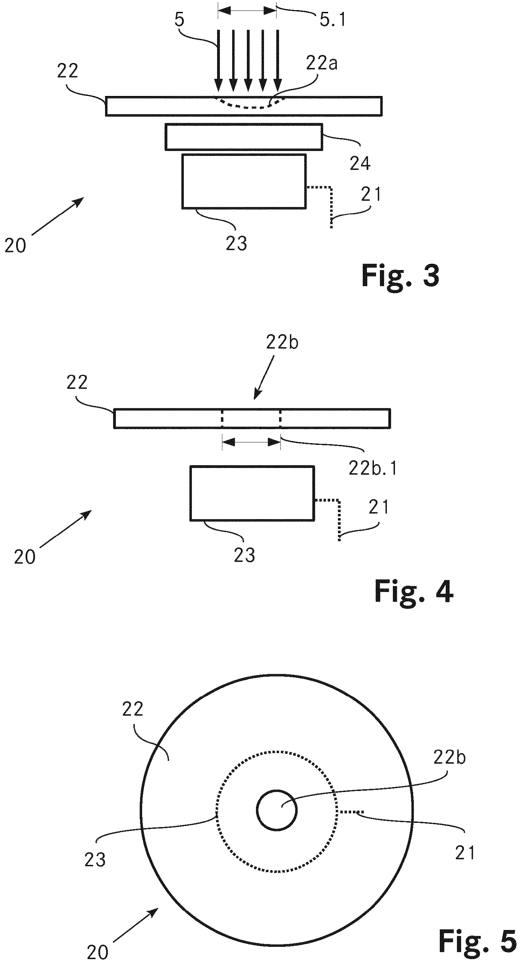

In Fig. 3, a process of producing the optical sensor unit 20 is shown in an intermediate stage. An optical sensor 23, i.e. a photodiode, is covered with an opaque material 22 in the form of a sheet of steel with a thickness of 20 $\mu$m. Between the opaque material 22 and the optical sensor 23, a beam blocking material 24 is arranged. The blocking material 24 is a further sheet of steel with a thickness larger than the opaque material 22. In Fig. 3, the beam of laser pulses 5 having a width 5.1 of about 10 $\mu$m is shown during ablation of the opaque material 22. As shown in Fig. 3 an ablation crater 22a has been formed in the opaque material 22 at this stage.

Fig. 4 shows the situation after the ablation process has been completed. The opaque material 22 now features a through hole or a pinhole 22b, respectively. The pinhole has a diameter 22b.1 which is similar to the width 5.1 of the beam of laser pulses 5 used in the ablation process, i.e. about 10 $\mu$m. Moreover, the beam blocking material 24 has been removed. Thus, Fig. 4 shows the optical sensor unit 20 ready to use.

Fig. 5 shows a top view of the optical sensor unit 20. As can be seen, the pinhole 22b is centered above the optical sensor 23.

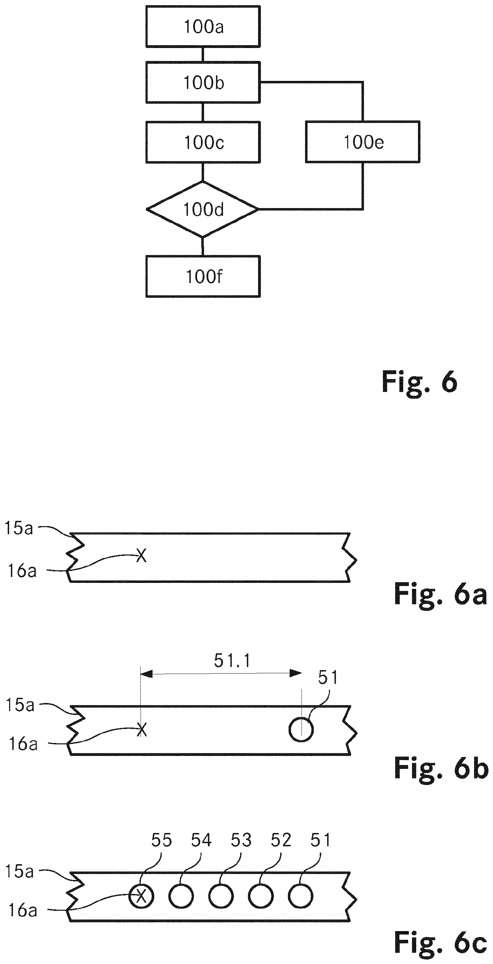

Fig. 6 schematically represents a process for adjusting the first laser processing apparatus 1a. Thereby, the phase of the scanner control signal 12.1, 12.2 is adjusted in an iterative process until the deviation between the desired position 16a and the effective position falls below a predetermined threshold.

In the first step 100a, the desired position 16a is defined on the first target 15a, e.g. by forming an indentation at the desired position. Fig. 6a shows a detailed view of the situation after the first step 100a.

In the second step 100b, a laser pulse is emitted with the laser scanner 9 in dynamic mode. Thereby, the pulse energy is chosen such that the laser pulse generates a small ablation mark on the first target 15a. Hence, a first effective position 51 is marked on the target 15a. This situation is shown in Fig. 6b.

Thereafter, a first deviation 51.1 between the desired position 16a and the first effective position 51 is identified in the third step 100c. This can e.g. be done with an optical microscope.

In the fourth step 100d, it is checked whether the deviation falls below a predetermined threshold. For example, the threshold is 0.1 times a diameter if the laser spot size on the target 15a, e.g. 0.1 $\mu$m.

If the deviation does not fall below the predetermined threshold, the phase of the scanner control signal 12.1, 12.2 is adjusted in the fifth step 100e.

Then, the second step 100b, third step 100c and fourth step 100d are repeated, in this example case four times, until the deviation between the desired position 16a and the effective position 52, 53, 54 falls below the predetermined threshold.

If the deviation does fall below the predetermined threshold, the adjustment is completed and the final stage 100f has been reached. This situation is shown in Fig. 6c.

Fig. 7 schematically represents a process for adjusting the second laser processing apparatus 1b. Thereby, the phase of the scanner control signal 12.1, 12.2 is adjusted in an iterative process until the deviation between the desired position 16b and the effective position falls below a predetermined threshold. In this case the adjustment is done by using the sensor unit 20.

In the first step 200a, the optical sensor unit 20 (without pinhole) is placed at the desired position in the working area. Subsequently, the beam of laser pulses 5 is aligned with the laser scanner 9 in static modes such that the laser beam impinges on the center of the opaque material 22. Then, as explained with Fig. 3, a pinhole is produced in the opaque material by ablation of the opaque material. After this process has been completed, the optical sensor unit 20 as shown in Fig. 4 is obtained.

Subsequently, a pulse form of a laser pulse going through the pinhole 22b is recorded with the optical sensor 23 in order to obtain a reference signal 60 in the form of the temporal evolution (t) of the laser pulse intensity (I). Fig. 8 shows the temporal evolution of the laser pulse intensity or the reference signal 60, respectively.

In the second step 200b, a first test laser pulse is emitted with the laser scanner 9 in dynamic mode and a first test pulse form is recorded with the optical sensor 23 in order to obtain a first test signal 61 (Fig. 8).

Thereafter, in the third step 200c, a first difference signal 61.1 is obtained by subtracting the first test signal 61 from the reference signal 60 and integrating the difference over time. This is shown in Fig. 9. Thereby, the "D" stands for the difference signal and "T" for a predetermined threshold.

In the fourth step 200d, it is checked whether the difference signal 61.1 falls below the predetermined threshold T. For example, the threshold is empirically determined.

If the difference signal 61.1 does not fall below the predetermined threshold T, the phase of the scanner control signal 12.1, 12.2 is adjusted in the fifth step 200e.

Then, the second step 200b, third step 200c and fourth step 200d are repeated, in this example three times, until the difference signals 62.1, 63.1 fall below the predetermined threshold T (see Fig. 9).

If the difference signal does fall below the predetermined threshold T (this is the case for signal 63.1, cf. Fig. 9), the adjustment is completed and the final stage 200f has been reached.

Steps 200b - 200f can be controlled by the main control unit 13 in a fully automatically manner.

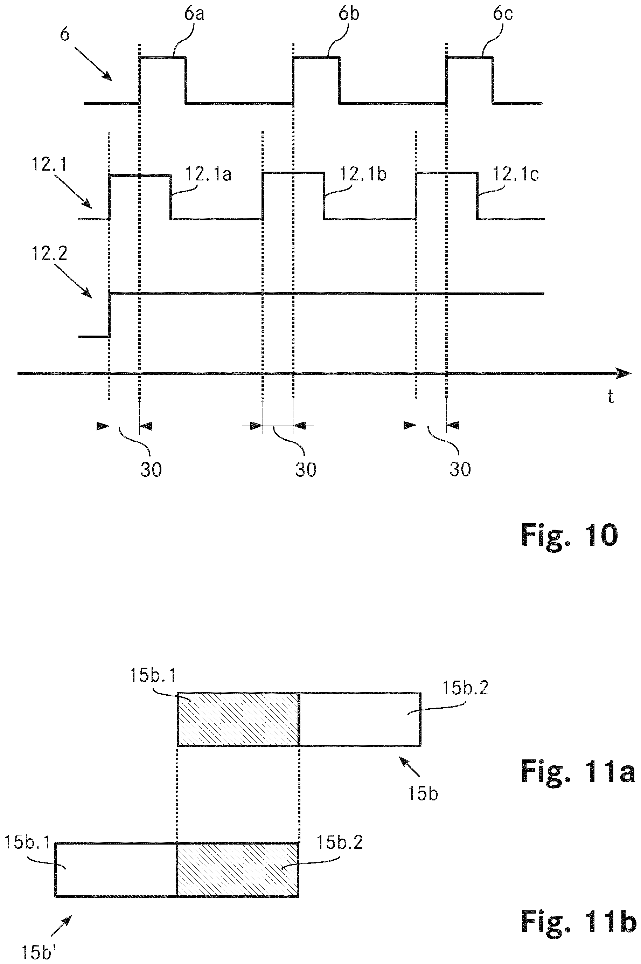

Fig. 10 shows the temporal evolution of some selected signals of the laser processing apparatuses shown in Fig. 1 and 2. Specifically, in Fig. 10 the laser pulse signal 6, consisting of individual rectangular electronic pulses 6a, 6b, 6c, is shown.

Also shown is the output signal 12.1 which is generated by the PLL 14 and which is used to control the controller clock of the clocked scanner control unit 11. As can be seen from Fig. 10, the output signal 12.1 is synchronized with the laser pulse signal 6 and consists of individual corresponding output pulses 12.1a, 12.1b, 12.1c. However, the output pulses 12.1a, 12.1b, 12.1c are shifted by a phase difference 30 with respect to the laser pulse signal 6.

Additionally, Fig. 10 shows the start signal 12.2 for the laser scanner 9 which is synchronized and in phase with the output signal 12.1.

Fig. 11a and 11b show how the target 15b of Fig. 2 can be processed. In Fig. 11a, the laser scanner 9 is located in the first position "A" (cf. Fig. 2) in which a first working field 15b.1 of the target 15b is processed. After completion of processing working field 15b.1, the scanner 9 is moved into the second position "B" (cf. Fig. 2) where the second working field 15b.2 of the target 15b can be processed as shown in Fig. 11 b. For even larger targets, the scanner might be moved into further positions such that the larger target is divided up into several working fields which can be processed one after another.

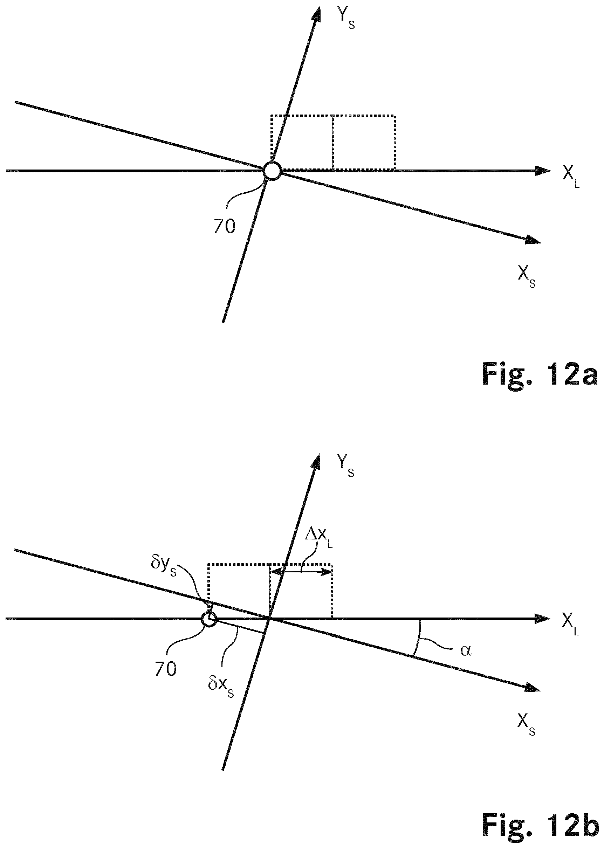

Fig. 12a and 12b show a method for measuring an angle $\alpha$ between the moveable linear stage axis 17 ($X_L$) and the coordinate system ($X_s$, $Y_s$) of the laser scanner 9. The first step is to drill a pinhole 70 with the scanner 9. The location of the pinhole 70 defines the origin of the two coordinate systems (Fig. 12a). In a second step the pinhole 70 and hence the origin of the linear axis coordinate system is displaced by $\Delta x_L$ with the linear axis 17 (Fig. 12b). In a third step the scanner 9 is used to search the location ($\delta x_S$, $\delta y_S$) of the pinhole 70 in the scanner coordinate system.

The angle $\alpha$ between the two coordinate systems is equal to:

$$\alpha = \arctan\left(\delta x_s \middle/ \delta x_L\right).$$

And the displacement in the scanner coordinate system is equal to:

$$\Delta_s = \sqrt{\delta x_s^{\,2} + \delta y_s^{\,2}}. \qquad (6)$$

The length $\Delta x_L$ is determined by the linear axis encoder and the length $\Delta_s$ is determined by the encoders of the scanner 9. Due to tolerances a small error between these two line lengths persists. If this error is not compensated a gap between two adjacent working fields subsists. Therefore the pitch in scanner coordinates is adapted according to

$$\delta_s = \frac{\Delta_s}{\Delta x_L}\delta_l.$$

However, it will be appreciated by those skilled in the art that the present invention can be embodied in other specific forms without departing from the spirit or essential characteristics thereof. The presently disclosed embodiments are therefore considered in all respects to be illustrative and not restricted.

For example, the laser scanner 9 can be replaced by a polygon scanner or another suitable scanner system.

Also it is possible to use a different laser source, another wavelength, shorter or longer pulse duration and/or another laser frequency.

The optical switch 7, which is based in an acousto-optic modulator (AOM), can e.g. be replaced by an electro-optic modulator (EOM).

In the embodiment shown in Fig. 2, instead of the target 15b to be processed, the laser scanner 9 can be mounted on a moveable stage axis. With such a setup the scanner can be moved in at least one direction between two or more positons. Also, it is possible to mount the laser scanner 9 as well as the target 15b on individual moveable axes. This will further extend the range of the laser scanner 9 such that even larger targets can be processed.

Also, the optical sensor 23, i.e. the photodiode, can be replaced by a charge coupled device (CCD).

As well, the targets 15a or 15b can be kept on a rotatable stage, such that the targets can be rotated around a longitudinal axis. This is especially suitable if cylinders for gravure printing are to be used as targets.

In summary, methods and apparatuses for laser processing have been provided which allow for high precision processing. The inventive solutions have been proven especially advantageous for surface structuring applications, such as for preparing gravure forms, e.g. gravure cylinders, used in gravure printing. Thereby, complex surface structures consisting of many individual dots can be precisely generated even on targets with large surfaces.

## Claims

1. Method for adjusting a laser processing apparatus (1a, 1b), whereby the laser processing apparatus comprises a laser source (2) capable of emitting a beam of laser pulses (5) for processing a target (15a, 15b), and a laser scanner (9) which is configured to move the beam of laser pulses (5) over the target (15a, 15b) to be processed, and whereby a movement of the laser scanner (9) is synchronized with respect to the laser pulses (5), wherein for synchronisation a phase of a scanner control signal (12.1, 12.2) which controls the movement of the laser scanner (9) is locked to the laser pulses (5a, 5b, 5c) or a laser pulse signal (6), **characterized in that** the phase of the scanner control signal (12.1) is adjusted such that an emitted laser pulse (5a, 5c) hits the target to be processed (15a, 15b) in a desired position (16a, 16b).

2. Method according to claim 1, **characterized in that** for adjusting the phase of the scanner control signal (12.1, 12.2) a deviation between the desired position (16a, 16b) and an effective position (51) of the emitted laser pulse on the target to be processed (15a) is identified.

3. Method according to claim 2, **characterized in that** the phase of the scanner control signal (12.1, 12.2) is adjusted in an iterative process until the deviation (51.1) between the desired position (16a) and the effective position (51) falls below a predetermined threshold.

4. Method according to any of claims 1 - 3, **characterized in that** adjusting the phase comprised to the following steps:

   a. Defining of the desired position (16a) on the target to be processed (15a);
   b. Emitting a laser pulse;
   c. Identification of a deviation (51.1) between the desired position (16a) and an effective position (51) of the emitted laser pulse;
   d. Checking if the deviation (51.1) falls below a predetermined threshold;
   e. If required, adjusting the phase of the scanner control signal (12.1, 12.2) and repeating steps b. - e. until the deviation (51.1) between the desired position (16a) and the effective position (51) falls below the predetermined threshold.

5. Method according to any of claims 1 - 4, **characterized in that** for defining the desired position (16b) in the working area of the laser processing apparatus (1b), an optical sensor (20) covered with a pinhole (22b) is placed at the desired position (16b) in the working area, the beam of laser pulses (5) is directed to the pinhole (22b) and subsequently a pulse form of a laser pulse (5) going through the pinhole (22b) is recorded with the optical sensor (20) in order to record a reference pulse (60).

6. Method according to claim 5, **characterized in that** the pulse form represents a temporal evolution of the laser pulse intensity.

7. Method according to any of claims 5 - 6, **characterized in that** in order to produce the pinhole (22b), the optical sensor (20) is covered with an opaque material (22), in particular a sheet of metal, and the beam of laser pulses (5) is directed to the opaque material (22) in order to produce the pinhole (22b) in the opaque material (20).

8. Method according to any of claims 5 - 7, **characterized in that** for testifying an alignment of the laser processing apparatus (1b) the method comprises the steps of:

   a. Defining the desired position (16b) in the working area of a laser processing apparatus with the method according to any of claims 5 - 7.
   b. Emitting a test laser pulse and recording a pulse form of the test laser pulse with the optical sensor (20) in order to obtain a test signal (61, 62, 63);
   c. Determining a difference signal (61.1, 62.1, 63.1) between the reference signal (60) and the test signal (61, 62, 63);

9. Method according to any of claims 5 - 7, **characterized in that** for adjusting the laser processing apparatus the method comprises the steps of:

   a. Defining the desired position (16b) in the working area of a laser processing apparatus with the method according to any of claims 5 - 7;
   b. Emitting a test laser pulse and recording a pulse form of the test laser pulse with the optical sensor (20) in order to obtain a test signal (61, 62, 63);
   c. Determining a difference signal (61.1, 62.1, 63.1) between the reference signal (60) and the test signal (61, 62, 63);
   d. Checking if the difference signal (61.1, 62.1, 63.1) falls below a predetermined threshold (T);
   e. If required, adjusting the phase of the control signal (12.1,12.2) of the laser scanner (9) and repeating steps b.-e. until the difference signal (61.1, 62.1, 63.1) falls below the predetermined threshold (T).

10. Method according to any of claims 8 - 9, **characterized in that**, step a) of claim 8 or claim 9 is performed with the laser scanner (9) in static mode and **characterized in that**, step b) of claim 8 or claim 9 is performed with the laser scanner (9) in dynamic mode.

11. Method according to any of claims 1 - 10, **characterized in that** the laser source (2) comprises a master oscillator (4), in particular a mode locked seed laser (3), followed by an amplifier, whereby the amplifier emits the beam of laser pulses (5) for processing the target (15a, 15b).

12. Method according to any of claims 1 - 11, **characterized in that** a pulse duration of laser pulses (5) emitted by the laser source (2) is in the range of 1 fs - 900 ps, preferably 100 fs - 100 ps, especially 200 fs - 50 ps.

13. Method according to any of claims 1 - 12, **characterized in that** the laser processing apparatus (1a, 1b) further comprises an optical switch (7) arranged after the laser source (2) and which is configured to block or let pass the beam of laser pulses (5) for processing the target (15a, 15b) and whereby the optical switch (7) is synchronized with respect to the laser pulses (5a, 5b, 5c).

14. Method according to any of claims 1 - 13, **characterized in that** the laser scanner (9) comprises a galvanometer driven pivotable mirror and/or **in that** the laser scanner (9) comprises a rotating mirror, especially a rotating mirror polygon.

15. Laser processing apparatus (1a, 1b) for performing a method according to any of claims 1 - 14, comprising a control unit (13), wherein the control unit (13) is configured such that a movement of the laser scanner (9) can be synchronized with respect to the laser pulses (5a, 5b, 5c), wherein for synchronisation a phase of a scanner control signal (12.1, 12.2) which controls the movement of the laser scanner (9) can be locked to the laser pulses (5a, 5b, 5c) or a laser pulse signal (6) and wherein the control unit (13) is additionally configured so that a phase of the scanner control signal (12.1, 12.2) can be adjusted, such that an emitted laser pulse (5a, 5c) hits the target (15a, 15b) to be processed in a desired position (16a, 16b) and whereby the laser processing apparatus (1a, 1b) furthermore comprises an optical sensor (20) covered with a pinhole (22b) which is placed at a desired position (16b) in the working area.

**Patentansprüche**

1. Verfahren zum Justieren einer Laserbearbeitungsvorrichtung (1a, 1b), wobei die Laserbearbeitungsvorrichtung eine Laserquelle (2) umfasst, die in der Lage ist, einen Strahl von Laserpulsen (5) zum Bearbeiten eines Targets(15a, 15b) zu emittieren, und einen Laserscanner (9), der konfiguriert ist, den Strahl von Laserpulsen (5) über das zu bearbeitende Target (15a, 15b) zu bewegen, und wobei eine Bewegung des Laserscanners (9) in Bezug auf die Laserpulse (5) synchronisiert ist, wobei zur Synchronisierung eine Phase eines Scannersteuersignals (12.1, 12.2), das die Bewegung des Laserscanners (9) steuert, mit den Laserpulsen (5a, 5b, 5c) oder einem Laserpulssignal (6) gekoppelt ist, **dadurch gekennzeichnet, dass** die Phase des Scannersteuersignals (12.1) so angepasst wird, dass ein emittierter Laserpuls (5a, 5c) das zu bearbeitende Target (15a, 15b) in einer Sollposition (16a, 16b) trifft.

2. Verfahren nach Anspruch 1, **dadurch gekennzeichnet, dass** zum Anpassen der Phase des Scannersteuersignals (12.1, 12.2) eine Abweichung zwischen der Sollposition (16a, 16b) und einer tatsächlichen Position (51) des emittierten Laserpulses auf dem zu bearbeitenden Target (15a) identifiziert wird.

3. Verfahren nach Anspruch 2, **dadurch gekennzeichnet, dass** die Phase des Scannersteuersignals (12.1, 12.2) in einem iterativen Vorgang angepasst wird bis die Abweichung (51.1) zwischen der Sollposition (16a) und der tatsächlichen Position (51) unter einen vorbestimmten Schwellenwert fällt.

4. Verfahren nach einem der Ansprüche 1 - 3, **dadurch gekennzeichnet, dass** das Anpassen der Phase die folgenden Schritte umfasst:

   a. Definieren der Sollposition (16a) auf dem zu bearbeitenden Target (15a);
   b. Emittieren eines Laserpulses;
   c. Identifizieren einer Abweichung (51.1) zwischen der Sollposition (16a) und einer tatsächlichen Position (51) des emittierten Laserpulses;
   d. Prüfen, ob die Abweichung (51.1) unter einen vorbestimmten Schwellenwert fällt;
   e. Falls nötig, Anpassen der Phase des Scannersteuersignals (12.1, 12.2) und Wiederholen der Schritte b. - e.

bis die Abweichung (51.1) zwischen der Sollposition (16a) und der tatsächlichen Position (51) unter den vorbestimmten Schwellenwert fällt.

5. Verfahren nach einem der Ansprüche 1 - 4, **dadurch gekennzeichnet, dass** zum Definieren der Sollposition (16b) in dem Arbeitsbereich der Laserbearbeitungsvorrichtung (1b) ein optischer Sensor (20), der mit einer Lochblende (22b) bedeckt ist, an der Sollposition (16b) in dem Arbeitsbereich platziert wird, der Strahl von Laserpulsen (5) auf die Lochblende (22b) gerichtet wird und nachfolgend eine Pulsform eines Laserpulses (5), der durch die Lochblende (22b) geht, mit dem optischen Sensor (20) aufgezeichnet wird, um einen Referenzpuls (60) aufzuzeichnen.

6. Verfahren nach Anspruch 5, **dadurch gekennzeichnet, dass** die Pulsform eine temporäre Entwicklung der Laserpulsintensität darstellt.

7. Verfahren nach einem der Ansprüche 5-6, **dadurch gekennzeichnet, dass**, um die Lochblende (22b) zu erzeugen, der optische Sensor (20) mit einem lichtundurchlässigen Material (22), insbesondere einem Metallblech, bedeckt wird, und der Strahl von Laserpulsen (5) auf das undurchsichtige Material (22) gerichtet wird, um die Lochblende (22b) in dem lichtundurchlässigen Material (20) zu erzeugen.

8. Verfahren nach einem der Ansprüche 5-7, **dadurch gekennzeichnet, dass** zum Testen einer Ausrichtung der Laserbearbeitungsvorrichtung (1b) das Verfahren die folgenden Schritte umfasst:

   a. Definieren der Sollposition (16b) in dem Arbeitsbereich einer Laserbearbeitungsvorrichtung mit dem Verfahren nach einem der Ansprüche 5-7.
   b. Emittieren eines Test-Laserpulses und Aufzeichnen einer Pulsform des Test-Laserpulses mit dem optischen Sensor (20), um ein Testsignal (61, 62, 63) zu erhalten;
   c. Bestimmen eines Differenzsignals (61.1, 62.1, 63.1) zwischen dem Referenzsignal (60) und dem Testsignal (61, 62, 63);

9. Verfahren nach einem der Ansprüche 5-7, **dadurch gekennzeichnet, dass** zum Justieren der Laserbearbeitungsvorrichtung das Verfahren die folgenden Schritte umfasst:

   a. Definieren der Sollposition (16b) in dem Arbeitsbereich einer Laserbearbeitungsvorrichtung mit dem Verfahren nach einem der Ansprüche 5-7;
   b. Emittieren eines Test-Laserpulses und Aufzeichnen einer Pulsform des Test-Laserpulses mit dem optischen Sensor (20), um ein Testsignal (61, 62, 63) zu erhalten;
   c. Bestimmen eines Differenzsignals (61.1, 62.1, 63.1) zwischen dem Referenzsignal (60) und dem Testsignal (61, 62, 63);
   d. Prüfen, ob das Differenzsignal (61.1, 62.1, 63.1) unter einen vorbestimmten Schwellenwert (T) fällt;
   e. Falls nötig, Anpassen der Phase des Steuersignals (12.1, 12.2) des Laserscanners (9) und Wiederholen der Schritte b. - e. bis das Differenzsignal (61.1, 62.1, 63.1) unter den vorbestimmten Schwellenwert (T) fällt.

10. Verfahren nach einem der Ansprüche 8-9, **dadurch gekennzeichnet, dass** Schritt a) in Anspruch 8 oder Anspruch 9 mit dem Laserscanner (9) im statischem Modus durchgeführt wird, und **dadurch gekennzeichnet, dass** Schritt b) in Anspruch 8 oder Anspruch 9 mit dem Laserscanner (9) im dynamischem Modus durchgeführt wird.

11. Verfahren nach einem der Ansprüche 1-10, **dadurch gekennzeichnet, dass** die Laserquelle (2) einen Master-Oszillator (4) umfasst, insbesondere einen modengekoppelten Seedlaser (3), gefolgt von einem Verstärker, wobei der Verstärker den Strahl von Laserpulsen (5) zur Bearbeitung des Targets (15a, 15b) emittiert.

12. Verfahren nach einem der Ansprüche 1-11, **dadurch gekennzeichnet, dass** eine Pulsdauer von Laserpulsen (5), die von der Laserquelle (2) emittiert werden, in Bereich von 1 fs - 900 ps liegen, bevorzugt 100 fs - 100 ps, insbesondere 200 fs - 50 ps.

13. Verfahren nach einem der Ansprüche 1-12, **dadurch gekennzeichnet, dass** die Laserbearbeitungsvorrichtung (1a, 1b) ferner einen optischen Schalter (7) umfasst, der nach der Laserquelle (2) angeordnet ist, und der konfiguriert ist, um den Strahl von Laserpulsen (5) zum Bearbeiten des Targets (15a, 15b) durchzulassen oder zu blockieren und wobei der optische Schalter (7) mit Bezug auf die Laserpulse (5a, 5b, 5c) synchronisiert ist.

14. Verfahren nach einem der Ansprüche 1-13, **dadurch gekennzeichnet, dass** der Laserscanner (9) einen durch ein Galvanometer angetriebenen schwenkbaren Spiegel umfasst und/oder dadurch, dass der Laserscanner (9) einen Drehspiegel umfasst, insbesondere ein Drehspiegelpolygon.

**15.** Laserbearbeitungsvorrichtung (1a, 1b) zur Durchführung eines Verfahrens nach einem der Ansprüche 1-14, umfassend eine Steuereinheit (13), wobei die Steuereinheit (13) so konfiguriert ist, dass eine Bewegung des Laserscanners (9) mit Bezug auf die Laserpulse (5a, 5b, 5c) synchronisiert werden kann, wobei zur Synchronisierung eine Phase eines Scannersteuersignals (12.1, 12.2), die die Bewegung des Laserscanners (9) steuert, mit den Laserpulsen (5a, 5b, 5c) oder mit einem Laserpulssignal (6) gekoppelt werden kann und wobei die Steuereinheit (13) zusätzlich so konfiguriert ist, dass eine Phase des Scannersteuersignals (12.1, 12.2) angepasst werden kann, so dass ein emittierter Laserpuls (5a, 5c) das zu bearbeitende Target(15a, 15b) in einer Sollposition (16a, 16b) trifft und wobei die Laserbearbeitungsvorrichtung (1a, 1b) des Weiteren einen optischen Sensor (20) umfasst, der mit einer Lochblende (22b) bedeckt ist, das an einer Sollposition (16b) in dem Arbeitsbereich platziert ist.

**Revendications**

**1.** Procédé de réglage d'un appareil de traitement laser (1a, 1b), moyennant quoi l'appareil de traitement laser comprend une source laser (2) capable d'émettre un faisceau d'impulsions laser (5) pour traiter une cible (15a, 15b) et un scanner laser (9) qui est configuré pour déplacer le faisceau d'impulsions laser (5) sur la cible (15a, 15b) à traiter, et moyennant quoi un mouvement du scanner laser (9) est synchronisé par rapport aux impulsions laser (5), dans lequel, pour la synchronisation, une phase d'un signal de commande de scanner (12.1, 12.2) qui commande le mouvement du scanner laser (9) est couplée aux impulsions laser (5a, 5b, 5c) ou à un signal d'impulsion laser (6), **caractérisé en ce que** la phase du signal de commande de scanner (12.1) est ajustée de sorte qu'une impulsion laser émise (5a, 5c) touche la cible à traiter (15a, 15b) dans une position souhaitée (16a, 16b).

**2.** Procédé selon la revendication 1, **caractérisé en ce que** pour ajuster la phase du signal de commande de scanner (12.1, 12.2), un écart entre la position souhaitée (16a, 16b) et une position effective (51) de l'impulsion laser émise sur la cible à traiter (15a) est identifié.

**3.** Procédé selon la revendication 2, **caractérisé en ce que** la phase du signal de commande de scanner (12.1, 12.2) est ajustée dans un processus itératif jusqu'à ce que l'écart (51.1) entre la position souhaitée (16a) et la position effective (51) tombe en dessous d'un seuil prédéterminé.

**4.** Procédé selon l'une quelconque des revendications 1 à 3, **caractérisé en ce que** l'ajustement de la phase comprend les étapes suivantes :

a. la définition de la position souhaitée (16a) sur la cible à traiter (15a) ;
b. l'émission d'une impulsion laser;
c. l'identification d'un écart (51.1) entre la position souhaitée (16a) et une position effective (51) de l'impulsion laser émise;
d. le fait de vérifier si l'écart (51.1) tombe en dessous d'un seuil prédéterminé;
e. si nécessaire, l'ajustement de la phase du signal de commande de scanner (12.1, 12.2) et la répétition des étapes b. à e. jusqu'à ce que l'écart (51.1) entre la position souhaitée (16a) et la position effective (51) tombe en dessous du seuil prédéterminé.

**5.** Procédé selon l'une quelconque des revendications 1 à 4, **caractérisé en ce que** pour définir la position souhaitée (16b) dans la zone de travail de l'appareil de traitement laser (1b), un capteur optique (20) recouvert d'un trou d'épingle (22b) est placé à la position souhaitée (16b) dans la zone de travail, le faisceau d'impulsions laser (5) est dirigé vers le trou d'épingle (22b) et ensuite une forme d'impulsion d'une impulsion laser (5) traversant le trou d'épingle (22b) est enregistrée à l'aide du capteur optique (20) afin d'enregistrer une impulsion de référence (60).

**6.** Procédé selon la revendication 5, **caractérisé en ce que** la forme d'impulsion représente une évolution temporelle de l'intensité d'impulsion laser.

**7.** Procédé selon l'une quelconque des revendications 5 à 6, **caractérisé en ce que** pour produire le trou d'épingle (22b), le capteur optique (20) est recouvert d'un matériau opaque (22), en particulier d'une feuille de métal, et le faisceau d'impulsions laser (5) est dirigé vers le matériau opaque (22) pour produire le trou d'épingle (22b) dans le matériau opaque (20).

**8.** Procédé selon l'une quelconque des revendications 5 à 7, **caractérisé en ce que**, pour tester d'un alignement de l'appareil de traitement laser (1b), le procédé comprend les étapes suivantes :

a. la définition de la position souhaitée (16b) dans la zone de travail d'un appareil de traitement laser avec le procédé selon l'une quelconque des revendications 5 à 7;

b. l'émission d'une impulsion laser de test et l'enregistrement d'une forme d'impulsion de l'impulsion laser de test à l'aide du capteur optique (20) afin d'obtenir un signal de test (61, 62, 63);

c. la détermination d'un signal de différence (61.1, 62.1, 63.1) entre le signal de référence (60) et le signal de test (61, 62, 63);

**9.** Procédé selon l'une quelconque des revendications 5 à 7, **caractérisé en ce que** pour ajuster l'appareil de traitement laser, le procédé comprend les étapes suivantes :

a. la définition de la position souhaitée (16b) dans la zone de travail d'un appareil de traitement laser avec le procédé selon l'une quelconque des revendications 5 à 7;

b. l'émission d'une impulsion laser de test et l'enregistrement d'une forme d'impulsion de l'impulsion laser de test à l'aide du capteur optique (20) afin d'obtenir un signal de test (61, 62, 63) ;

c. la détermination d'un signal de différence (61.1, 62.1, 63.1) entre le signal de référence (60) et le signal de test (61, 62, 63) ;

d. le fait de vérifier si le signal de différence (61.1, 62.1, 63.1) tombe en dessous d'un seuil prédéterminé (T) ;

e. si nécessaire, l'ajustement de la phase du signal de commande (12.1, 12.2) du scanner laser (9) et la répétition des étapes b. à e. jusqu'à ce que le signal de différence (61.1, 62.1, 63.1) tombe en dessous du seuil prédéterminé (T).

**10.** Procédé selon l'une quelconque des revendications 8 à 9, **caractérisé en ce que** l'étape a) de la revendication 8 ou 9 est réalisée à l'aide du scanner laser (9) en mode statique et **caractérisé en ce que** l'étape b) de la revendication 8 ou 9 est réalisée à l'aide du scanner laser (9) en mode dynamique.

**11.** Procédé selon l'une quelconque des revendications 1 à 10, **caractérisé en ce que** la source laser (2) comprend un oscillateur maître (4), en particulier un laser d'ensemencement en mode verrouillé (3), suivi d'un amplificateur, moyennant quoi l'amplificateur émet le faisceau d'impulsions laser (5) pour traiter la cible (15a, 15b).

**12.** Procédé selon l'une quelconque des revendications 1 à 11, **caractérisé en ce qu'**une durée d'impulsion des impulsions laser (5) émises par la source laser (2) est comprise entre 1 fs et 900 ps, de préférence entre 100 fs et 100 ps, en particulier entre 200 fs et 50 ps.

**13.** Procédé selon l'une quelconque des revendications 1 à 12, **caractérisé en ce que** l'appareil de traitement laser (1a, 1b) comprend en outre un commutateur optique (7) agencé après la source laser (2) et configuré pour bloquer ou laisser passer le faisceau d'impulsions laser (5) pour traiter la cible (15a, 15b) et moyennant quoi le commutateur optique (7) est synchronisé par rapport aux impulsions laser (5a, 5b, 5c).

**14.** Procédé selon l'une quelconque des revendications 1 à 13, **caractérisé en ce que** le scanner laser (9) comprend un miroir pivotant entraîné par galvanomètre et/ou **en ce que** le scanner laser (9) comprend un miroir rotatif, en particulier un miroir polygonal rotatif.

**15.** Appareil de traitement laser (1a, 1b) pour mettre en oeuvre un procédé selon l'une quelconque des revendications 1 à 14, comprenant une unité de commande (13), dans lequel l'unité de commande (13) est configurée de sorte qu'un mouvement du scanner laser (9) peut être synchronisé par rapport aux impulsions laser (5a, 5b, 5c), dans lequel, pour la synchronisation, une phase d'un signal de commande de scanner (12.1, 12.2) qui commande le mouvement du scanner laser (9) peut être couplées aux impulsions laser (5a, 5b, 5c) ou à un signal d'impulsion laser (6) et dans lequel l'unité de commande (13) est en outre configurée de sorte qu'une phase du signal de commande de scanner (12.1, 12.2) peut être ajustée, de sorte qu'une impulsion laser émise (5a, 5c) touche la cible (15a, 15b) à traiter dans une position souhaitée (16a, 16b) et moyennant quoi l'appareil de traitement laser (1a, 1b) comprend en outre un capteur optique (20) recouvert d'un trou d'épingle (22b) qui est placé à une position souhaitée (16b) dans la zone de travail.

Fig. 1

Fig. 2

**Fig. 3**

**Fig. 4**

**Fig. 5**

**Fig. 7**

**Fig. 8**

**Fig. 9**

Fig. 6

Fig. 6a

Fig. 6b

Fig. 6c

**Fig. 10**

**Fig. 11a**

**Fig. 11b**

Fig. 12a

Fig. 12b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 112009003829 T5, Toshiba
- WO 2013118046 A1
- US 5999302 A
- EP 2463051 A1